# EUROPÄISCHE PATENTSCHRIFT

(11) **EP 2 298 994 B1**
(45) Veröffentlichungstag und Bekanntmachung des Hinweises auf die Patenterteilung: **09.03.2016**
(21) Anmeldenummer: 09011380.4
(22) Anmeldetag: 04.09.2009
(51) Int. Cl.: E01C 5/20, E01C 9/00

(54) **Als Kunststoffspritzgussteil ausgebildete mit Splitt befüllbare Zellen bildende Bodenfestigungsplatte**
Plastic injection moulded soil stabilisation mat with cells which can be filled with gravel
Cellules pouvant être remplies de graviers, formées comme élément moulé par injection en matière synthétique, et formant une plaque de fixation au sol

(43) Veröffentlichungstag der Anmeldung: 23.03.2011
(73) Patentinhaber: Ritter GmbH, 86830 Schwabmünchen (DE)
(72) Erfinder: Ritter, Frank Georg, 87745 Eppishausen/Weiler (DE)
(74) Vertreter: Gallo, Wolfgang

(56) Entgegenhaltungen:
- DE-A1- 10 062 711
- DE-U1- 29 621 674
- FR-A1- 2 651 257
- US-A- 5 713 155

## Beschreibung

Die Erfindung betrifft eine als Kunststoffspritzgussteil ausgebildete, insbesondere großformatige und mit Splitt befüllbare Zellen bildende Bodenbefestigungsplatte zur Herstellung befestigter, aber nicht versiegelter Flächen wie beispielsweise Wege, Einfahrten, Parkplätze und ähnliches, die sauber und fest, aber wasserdurchlässig sein sollen.

Solche Bodenbefestigungsplatten, auch Gitterplatten oder Wabenplatten genannt, sind seit längerer Zeit bekannt. Sie wurden ursprünglich zum Verfüllen der Gitteröffnungen mit Erde und zur Begrünung von befestigten Flächen vorgeschlagen. Solche Platten wurden aber auch mit Splitt befüllt, um zwar nicht begrünte, aber gleichwohl wasserdurchlässige und damit eine Bodenversiegelung vermeidende befestigte Flächen herzustellen.

Bei der Befüllung solcher herkömmlicher Bodenbefestigungsplatten mit Splitt treten jedoch erhebliche Probleme auf, die noch weit gravierender als die bei mit Erde befüllten Gitterplatten bekannten Probleme sind, und die im Einsatz solcher Platten für bereits nach kurzer Zeit auftretende erhebliche Schäden der befestigten Flächen ursächlich sind.

Eines dieser Probleme ist der Umstand, dass Splittsteinchen durch die Belastungen beim Befahren solcher befestigter Flächen durch die Entwässerungsöffnungen am Boden der Bodenbefestigungsplatten in den Untergrund gedrückt werden und sich mit der Zeit unter die Platte schieben können, wodurch ein Anheben der Platten und ein Verlust von deren Flächenbündigkeit auftreten kann.

Zu dem eben erwähnten Problem trägt die DE 20 2008 011 569 U1 bereits vor, dass Entwässerungsöffnungen in der Bodenwand einer solchen Bodenbefestigungsplatte jeweils durch ein Öffnungsgitter gebildet sind, dessen Maschenweite so bemessen ist, dass sie etwas kleiner als die Korngröße des zur Befüllung der Zellen vorgesehenen Splitts ist. Damit wird vermieden, dass sich Splitt aus den Zellen der Bodenbefestigungsplatte nach Eindrücken in den Untergrund unter die Platte schiebt.

Aus der US-5,713,155 A1 ist eine Bodenbefestigungsplatte mit den Merkmalen des Oberbegriffs des Anspruchs 1 bekannt, deren Bodenwand nicht dargestellte und nicht näher beschriebene Entwässerungsöffnungen aufweist, und deren Wandgitter Sechseckzellen bildet, wobei die randständigen Zellen unvollständig sind und durch ebenfalls unvollständige randständige Zellen benachbarter Platten jeweils zu einer vollständigen Zelle ergänzt werden. Die jeweils einen 60°-Winkel zum Plattenrand bildenden Zellenwandfragmente haben am Plattenrand jeweils um 90° einwärts umgebogene Enden, um mit einem korrespondierenden Zellenwandfragment einer benachbarten Platte einen stumpfen Stoß zu bilden. Entlang der Plattenränder sind Bodenwandvorsprünge ausgebildet, die an zwei gegenüberliegenden Plattenrändern wechselseitig unter die Bodenwand der benachbarten Platte greifen und damit die benachbarten bodenbefestigungsplatten höhenmäßig relativ zueinander festlegen.

Ein zweites, in seinen Wirkungen noch gravierenderes Problem besteht darin, dass die aus Kunststoff bestehenden Bodenbefestigungsplatten bei Temperaturschwankungen, wie sie insbesondere im Sommer zwischen kühlen Nächten und massiver Aufheizung durch Sonneneinstrahlung an heißen Tagen entstehen, erheblichen Wärmedehnungs- und Schrumpfungsbewegungen ausgesetzt sind.

Die durch Temperaturschwankungen bedingte Problematik der Wärmedehnungs- und Schrumpfungsbewegungen ist um so größer, je größer das Plattenformat ist. Im Hinblick auf eine kostengünstige Verlegung sowie auch auf die Reduzierung der notwendigen Plattenstöße ist es wünschenswert, großformatige Bodenbefestigungsplatten zu verwenden.

Aber je größer das Plattenformat ist, desto ausgeprägter sind die relativen Wärmedehnungs- und Schrumpfungsbewegungen zwischen benachbarten Platten an den Plattenstößen. Bei Wärmedehnungsbewegungen besteht die Gefahr, dass Füllmaterial aus den Zellen zwischen aneinander gestoßene Wandbereiche benachbarter Platten gerät, wenn durch Kälteeinwirkung die Platten geschrumpft sind und ein Spalt entstanden ist, so dass dann bei anschließender Erwärmung und Wiederausdehnung der Platten ein Schließen des Spalts nicht möglich ist und sich daher die Plattenfläche hochwölbt. Dieses Phänomen ist bei Befüllung der Zellen mit Splitt natürlich besonders ausgeprägt, weil Splittsteinchen absolut starr sind und keine Verdrängung und kein Zerdrücken ermöglichen, wie das bei einer Befüllung der Zellen mit Erde oder Humus möglich ist.

Aufgabe der Erfindung ist es daher, Bodenbefestigungsplatten der eingangs genannten Art so auszubilden, dass sie mit Splitt befüllbar und gleichzeitig großformatig gestaltet sein können, ohne dass im Betrieb auftretende Wärmebewegungen sich schadensträchtig auswirken können.

Diese Aufgabe wird gemäß der Erfindung durch die im Anspruch 1 angegebene Anordnung gelöst.

Vorteilhafte Ausgestaltungen der Erfindung sind Gegenstand der Unteransprüche.

Erfindungsgemäß ist eine Bodenbefestigungsplatte der in Rede stehenden Art also so ausgebildet, dass sich Boden- und Wandelemente an den Stößen benachbarter Platten überlappen und der Möglichkeit entgegenwirken, dass sich Splittsteinchen zwischen überlappende Boden- und Wandelemente der aneinander gestoßenen Platten schieben können, und dass die Kupplungselemente zwischen benachbarten Platten, welche diese sowohl gegen ein Trennen als auch gegen relative vertikale Bewegungen der Plattenränder sichern, Wärmebewegungen der benachbarten Platten ohne Beeinträchtigung ihrer Funktion zulassen.

Ein Ausführungsbeispiel der Erfindung wird nachstehend unter Bezugnahme auf die anliegenden Zeichnungen mehr im Einzelnen beschrieben. In den Zeichnungen zeigt:
- Fig. 1: in perspektivischer Ansicht eine Bodenbefestigungsplatte nach der Erfindung schräg von oben,
- Fig. 2: die Bodenbefestigungsplatte nach Fig. 1 in perspektivischer Ansicht schräg von unten,
- Fig. 3: in ausschnittsweiser Draufsicht einen Plattenverbund aus Bodenbefestigungsplatten nach der Erfindung,
- die Fig. 4A und 4B: die Kupplungsmittel zur Verbindung benachbarter Platten an ihrer Querseite (kürzeren Seite) an der einen bzw. der anderen Platte,
- die Fig. 5A und 5B: die Kupplung benachbarter Platten an deren Querseite in perspektivischer Ansicht bzw. in der Draufsicht,
- die Fig. 6A und 6B: die Kupplungsmittel zur Verbindung benachbarter Platten an deren Längsseite an der einen bzw. der anderen Platte,
- die Fig. 7A und 7B: die Kupplung benachbarter Platten an deren Längsseiten in perspektivischer Ansicht bzw. in der Draufsicht,
- die Fig. 8A, 8B und 8C: in perspektivischer Darstellung die Überlappungssituation an einem längsseitigen Plattenstoß auf der einen Längsseite einer Platte, und
- die Fig. 9A, 9B und 9C: die Überlappungssituation an einem längsseitigen Plattenstoß an der anderen Längsseite einer Platte.

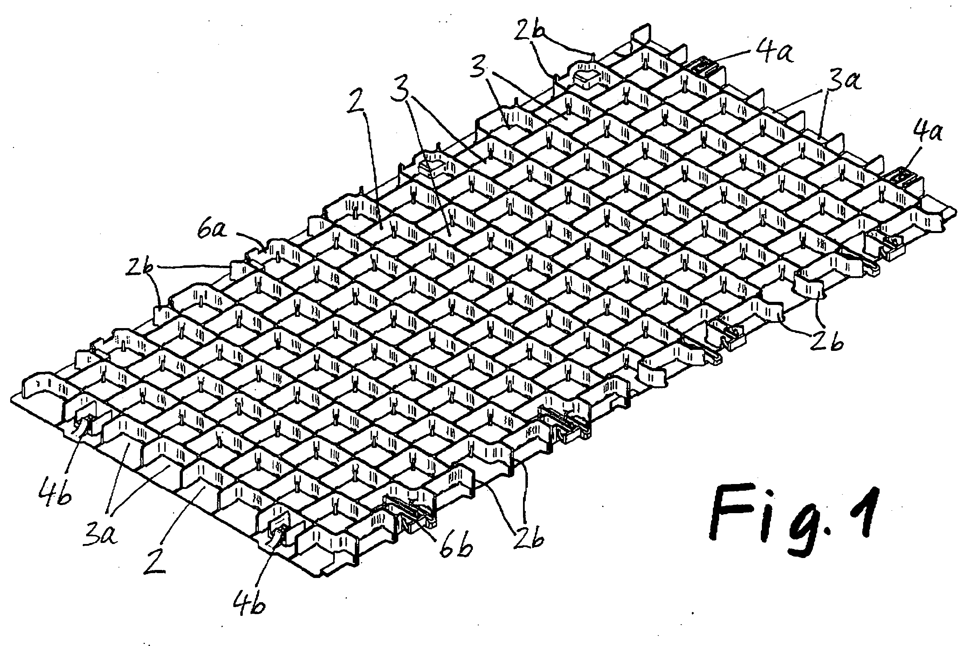

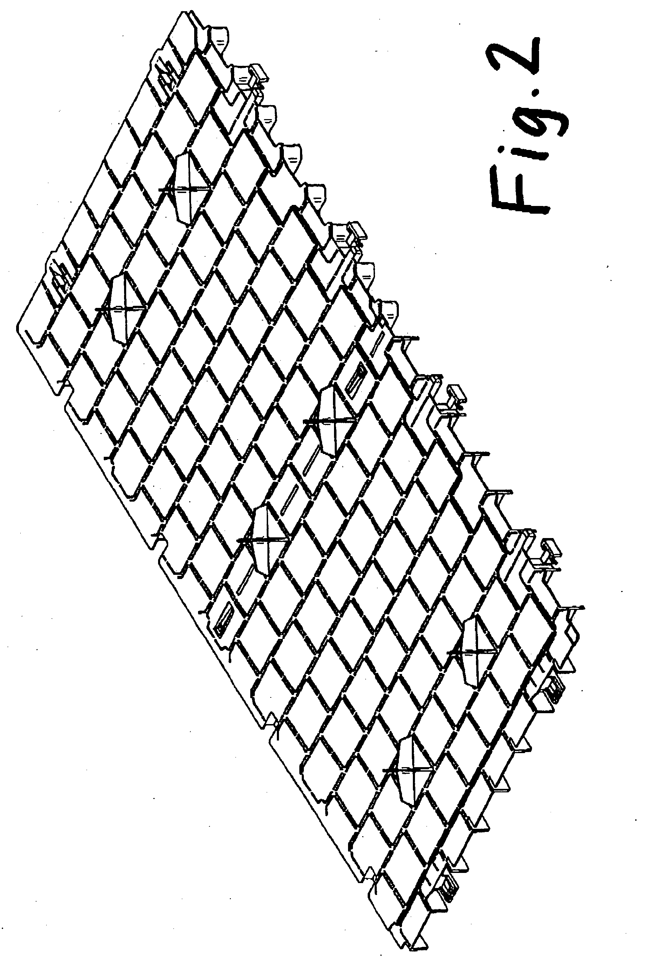

Die Fig. 1 und 2 zeigen eine Bodenbefestigungsplatte nach der Erfindung jeweils in perspektivischer Ansicht von schräg oben bzw. von schräg unten.

Wie man sieht, ist die Platte jeweils rechteckig ausgebildet. Die Platte ist großformatig und hat beispielsweise eine Länge von ca. 1,20 Meter und eine Breite von ca. 0,60 Meter, so dass auch große Flächen effektiv zu belegen sind und dabei eine relativ kleine Anzahl von Plattenstößen entsteht.

Wie die Fig. 1 und 2 weiter zeigen, besteht die Bodenbefestigungsplatte aus einer Bodenwand 1 und einem damit einstückig ausgebildeten, sich von der Bodenwand nach oben erstreckenden Wandgitter 2 zur Bildung einer Vielzahl von beim Ausführungsbeispiel quadratischen oder rechteckigen Zellen 3, die insbesondere mit Splitt verfüllbar sind. Wie man aus den Fig. 1 und 2 sieht, sind die Zellen dabei in versetzter Anordnung gebildet.

Die Bodenwand 1 ist im wesentlichen geschlossen, hat aber eine Vielzahl kleiner Wasserdurchtrittsöffnungen, die in den Fig. 1 und 2 nicht eigens dargestellt sind. Die Wasserdurchtrittsöffnungen sind klein und können als schmale Schlitzöffnungen oder kleine Bohrungen ausgebildet sein, so dass zwar Wasser ablaufen kann, aber in die Zellen 3 eingefüllte Splittsteinchen nicht nach unten austreten können.

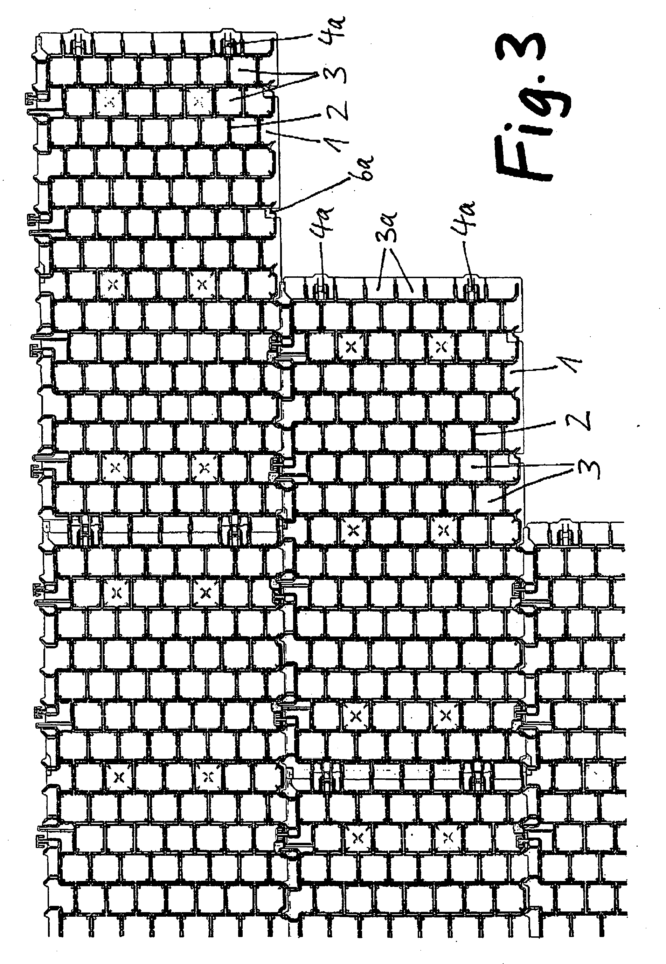

Fig. 3 zeigt in Draufsicht einen Ausschnitt aus einem Plattenverbund, woraus ersichtlich ist, dass eine Mehrzahl von Bodenbefestigungsplatten nach den Fig. 1 und 2 miteinander gekuppelt eine befestigte Bodenfläche ergeben. Dabei sind die einzelnen Bodenbefestigungsplatten, die gemäß den Fig. 1 und 2 ausgebildet sind, an ihren Schmalseiten gekuppelt und bilden entsprechende Reihen und sie sind außerdem an ihren Längsseiten gekuppelt, wobei dort die Platten jeweils um eine halbe Länge gegeneinander versetzt angeordnet sind, so dass jede Platte an ihren Längsseiten hälftig mit zwei benachbarten Platten verbunden ist.

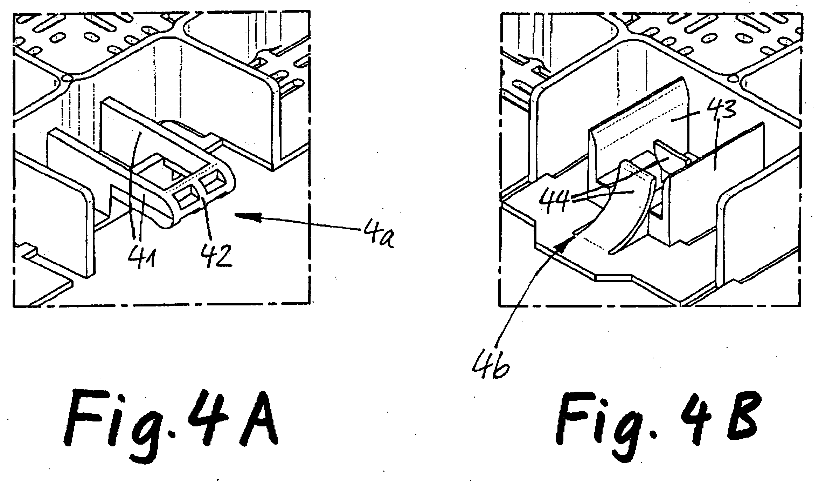

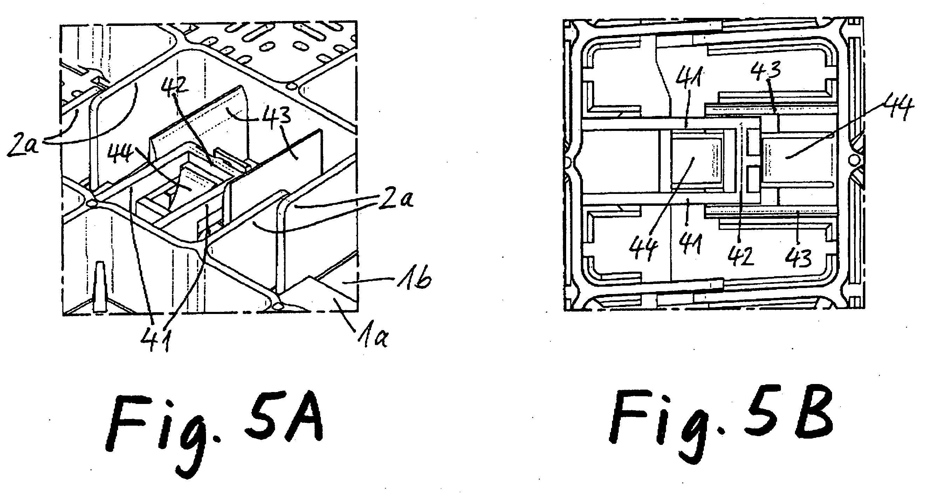

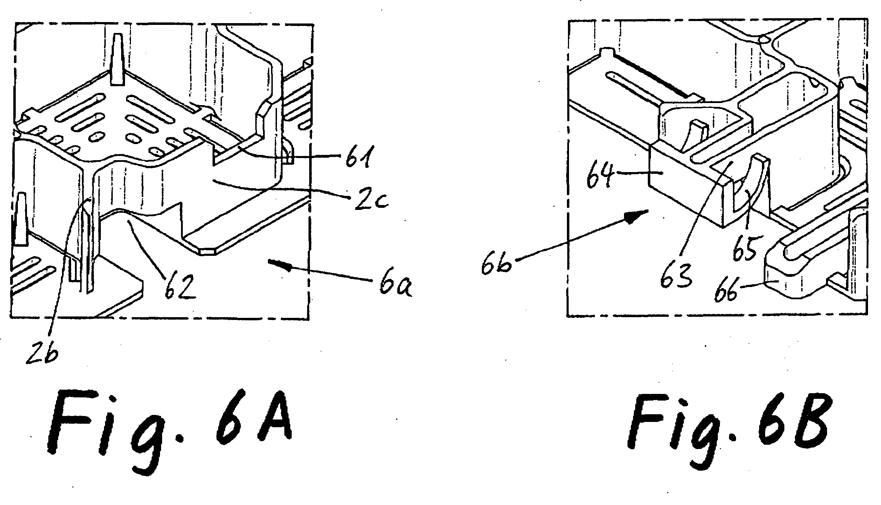

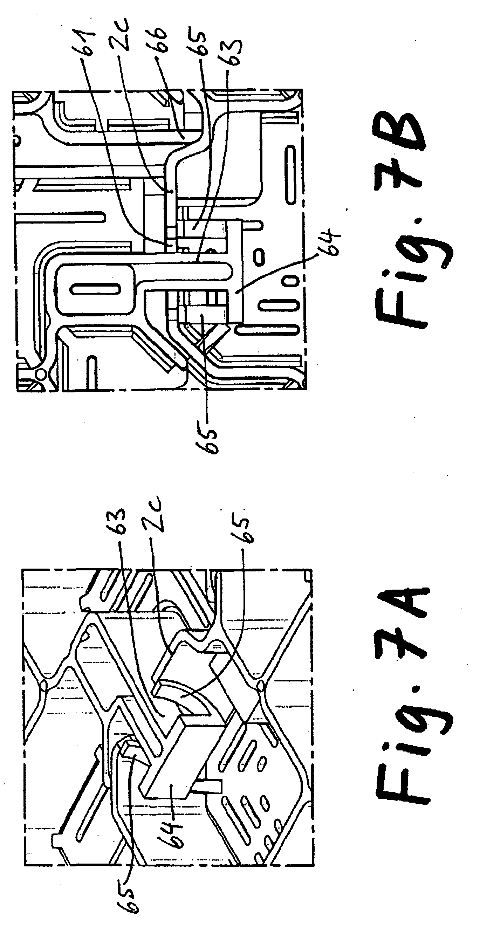

Die Fig. 4A und 4B sowie 5A und 5B zeigen die Einzelheiten der Kupplung benachbarter Platten an deren Querseiten, also an deren kurzen Seiten, und die Fig. 6A und 6B sowie 7A und 7B zeigen die Kupplungsverbindung der Platten an deren Längsseiten.

Die Figuren 1 und 2 zeigen eine Bodenbefestigungsplatte nach der Erfindung jeweils in perspektivischer Ansicht von schräg oben bzw. von schräg unten.

Wie man sieht, ist die Platte jeweils rechteckig ausgebildet. Die Platte ist großformatig und hat beispielsweise eine Länge von ca. 1,20 Meter und eine Breite von ca. 0,60 Meter, so dass auch große Flächen effektiv zu belegen sind und dabei eine relativ kleine Anzahl von Plattenstößen entsteht.

Wie die Figuren 1 und 2 weiter zeigen, besteht die Bodenbefestigungsplatte aus einer Bodenwand 1 und einem damit einstückig ausgebildeten, sich von der Bodenwand nach oben erstreckenden Wandgitter 2 zur Bildung einer Vielzahl von beim Ausführungsbeispiel quadratischen oder rechteckigen Zellen 3, die insbesondere mit Splitt verfüllbar sind. Wie man aus den Figuren 1 und 2 sieht, sind die Zellen dabei in versetzter Anordnung gebildet.

Die Bodenwand 1 ist im wesentlichen geschlossen, hat aber eine Vielzahl kleiner Wasserdurchtrittsöffnungen, die in den Figuren 1 und 2 nicht eigens dargestellt sind. Die Wasserdurchtrittsöffnungen sind klein und können als schmale Schlitzöffnungen oder kleine Bohrungen ausgebildet sein, so dass zwar Wasser ablaufen kann, aber in die Zellen 3 eingefüllte Splittsteinchen nicht nach unten austreten können.

Figur 3 zeigt in Draufsicht einen Ausschnitt aus einem Plattenverbund, woraus ersichtlich ist, dass eine Mehrzahl von Bodenbefestigungsplatten nach den Figuren 1 und 2 miteinander gekuppelt eine befestigte Bodenfläche ergeben. Dabei sind die einzelnen Bodenbefestigungsplatten, die gemäß den Figuren 1 und 2 ausgebildet sind, an ihren Schmalseiten gekuppelt und bilden entsprechende Reihen, und sie sind außerdem an ihren Längsseiten gekuppelt, wobei dort die Platten jeweils um eine halbe Länge gegeneinander versetzt angeordnet sind, so dass jede Platte an ihren Längsseiten hälftig mit zwei benachbarten Platten verbunden ist.

Die Figuren 4A und 4B sowie 5A und 5B zeigen die Einzelheiten der Kupplung benachbarter Platten an deren Querseiten, also an deren kurzen Seiten, und die Figuren 6A und 6B sowie 7A und 7B zeigen die Kupplungsverbindung der Platten an deren Längsseiten.

Die an den Schmalseiten der Platte zum Plattenrand hin verlaufenden Seitenwände der offenen Halbzellen 3a sind, was in der perspektivischen Darstellung nach Figur 1 nicht erkennbar ist, aber bei genauerem Hinsehen am rechten Ende der Platten in Figur 3 bei genauerem Hinsehen erkennbar ist, in komplementärer Weise leicht schräg gestellt, so dass beim Kuppeln benachbarter Platten an ihren Schmalseiten diese Zellenwände sich jeweils etwas überlappen, wie ebenfalls in Figur 3 sichtbar ist. Besser erkennt man diesen Sachverhalt allerdings in den Figuren 5A und 5B, wo in perspektivischer Ansicht bzw. Draufsicht ein Ausschnitt von 2 gekuppelten Plattenschmalseiten im Bereich einer Zelle mit Kupplungsmitteln dargestellt ist. Dort sieht man, wie die jeweils äußeren Enden der Zellenwände 2a sich überlappen.

Die leichte Schrägstellung dieser Wände ermöglicht es, eine gewisse Federwirkung hervorzurufen, so dass diese sich überlappenden Wandbereiche satt aneinander anliegen. Wärmebewegungen zwischen den Platten sind also möglich, wobei die Zellenwände 2a sich relativ zueinander bewegen können, so dass der Überlappungsbereich dann je nach Dehnung oder Schrumpfung der Platten sich etwas vergrößert oder verkleinert.

An den Längsrändern der Bodenbefestigungsplatte haben die zum jeweiligen Plattenrand hin verlaufenden Zellenwände jeweils mit leicht abgeknickten Endbereichen 2b versehen, wobei das nicht nur für die Zellenwände der offenen Zellen gilt, sondern auch die Zellenwände der am einen Längsrand der Platte angeordneten geschlossenen Zellen. Beim Kuppeln benachbarter Platten an deren Längsrändern wirken damit die leicht abgeknickten Wandendbereiche 2b miteinander zusammen, was Wärmebewegungen sowohl in Plattenquerrichtung als auch in Plattenlängsrichtung ermöglicht.

Dieser Sachverhalt ist sowohl aus den Figuren 1 und 3 als auch aus den Figuren 7A und 7B ersichtlich, welch letzterer gekuppelt Plattenlängsränder wiederum im Bereich einer Zelle mit Kupplungsmitteln in perspektivischer Ansicht und in Draufsicht zeigen.

Aus Figur 1 ist aber noch ein weiterer wichtiger Sachverhalt in Bezug auf diese abgeknickten Wandendbereiche 2b ersichtlich. Wie man dort sieht, sind diese abgeknickten Wandendbereiche 2b, von der Plattenmitte ausgehend, über die eine Hälfte der Plattenlänge zu der an diese Hälfte anschließenden Schmalseite abgeknickt und im Bereich der anderen Hälfte der Plattenlängsseite zu der sich daran anschließenden Schmalseite hin abgeknickt. Die Abknickrichtung ist also jeweils über die eine Hälfte der Plattenlängsseite entgegengesetzt zur derjenigen an der anderen Hälfte der Plattenlängsseite, jeweils zur nächstliegenden Plattenschmalseite hin. Dies gilt für beide Längsseiten der Platte, wie aus Figur 1 anschaulich erkennbar ist. Diese Maßnahme verbessert das Wärmebewegungsverhalten der einzelnen Platte im verlegten Plattenverbund deutlich.

Wie man aus der perspektivischen Ansicht schräg von oben nach Figur 1 leicht erkennt, sind jeweils an den Schmalseiten der Platte zwei Kopplungsvorrichtungen und an jeder Längsseite vier Kupplungsvorrichtungen vorgesehen. Dabei sind an der einen Schmalseite zwei gleiche Kupplungsvorrichtungen 4a, im einzelnen dargestellt in Figur 4A, und an der anderen Schmalseite der Platte wiederum zwei gleiche, aber zu den Kupplungsvorrichtungen 4a der ersteren Plattenschmalseite komplementäre Kupplungsvorrichtungen 4b, im einzelnen in Figur 4B dargestellt, angeordnet.

Ebenso sind an der einen Plattenlängsseite vier gleiche Kupplungsvorrichtungen 6a, mehr im einzelnen in Figur 6A dargestellt, und an der anderen Plattenlängsseite vier wiederum gleiche, aber zu den Kupplungsvorrichtungen 6a der ersteren Plattenlängsseite komplementäre Kupplungsvorrichtungen 6b, mehr im einzelnen dargestellt in Figur 6B, angeordnet.

Dabei sind die beiden komplementären Kupplungsvorrichtungen 4a und 4b an den Plattenschmalseiten anders ausgebildet wie die komplementären Kupplungsvorrichtungen 6a und 6b an den Plattenlängsseiten. Die Kupplungsvorrichtungen 6a und 6b an den Plattenlängsseiten bewirken nicht nur eine Verbindung benachbarter Platten unter formschlüssiger Sicherung gegen ein Auseinanderziehen, sondern auch eine formschlüssige Verbindung der benachbarten Platten als Sicherung gegen eine höhenmäßige Versatzbewegung. Die Kupplungsvorrichtungen 4a und 4b an den Plattenschmalseiten bewirken hingegen eine Verbindung der benachbarten Platten nur in horizontaler Richtung, also mit formschlüssiger Sicherung gegen Auseinanderziehen. Da aber, wie anhand von Fig. 3 erläutert wurde, in den verlegten Plattenverband die länglichen Platten um jeweils eine halbe Länge versetzt angeordnet sind, erfolgt eine flächenbündige Sicherung des gesamten Plattenverbands über die Kupplungen an den Längsrändern, so dass eine gegen relativen Höhenversatz wirksame Kupplungsverbindung an den Schmalseiten nicht notwendig ist. Sie wäre auch nicht sinnvoll, weil dadurch das einfache Verlegen behindert würde.

Allerdings ist faktisch eine gewisse formschlüssige Verbindung gegen eine Auslenkung in Richtung eines Höhenversatzes an den gekuppelten Schmalseiten benachbarter Platten dadurch gegeben, dass die komplementären Kupplungselemente der Kupplungsvorrichtungen 4a und 4b, wie nachstehend im einzelnen erläutert wird, miteinander eine Rastverbindung bilden.

Die Fig. 4A und 4B zeigen die Ausbildung der komplementären Kupplungsvorrichtungen 4a und 4b an den beiden Schmalseiten der Platte in näheren Einzelheiten.

Gemäß 4A ist jede Kupplungsvorrichtung 4a als horizontaler Bügel ausgebildet, bestehend aus zwei auswärts ragenden Stegen 41 und einem dazwischen verlaufenden, quasizylindrischen, aber kunststoffgerecht gestalteten Mittelstück 42. Die dazu komplementäre Kupplungsvorrichtung 4b ist gemäß Fig. 4B als Aufnahme für den Bügel 41, 42 der Kupplungsvorrichtung 4a ausgebildet, und zwar derart, dass das Kuppeln dieser beiden Kupplungsvorrichtungen elastisch rastend und unter Zulassung wärmebewegungsbedingter Auslenkungen in Längs- und Querrichtung erfolgt. Dazu besteht die Kupplungsvorrichtung 4b aus zwei beiderseitigen, in Plattenlängsrichtung verlaufenden Führungsschenkeln 43, welche den Bügel 41, 42 der Kupplungsvorrichtung 4a zwischen sich aufnehmen, und aus zwei aufgrund der Materialelastizität des zur Herstellung der Platte verwendeten Kunststoffs federelastischen, quer zu den Schenkeln 43 verlaufenden Laschen 44, die wie eine Federklammer zusammenwirken, um das Mittelstück 42 des Bügels 41, 42 rastend aufzunehmen. Da das Mittelstück 42 der Kupplungsvorrichtung 4a quasi-zylindrisch ist, wirkt es auch noch wie ein Scharnier, so dass leichte Winkelbewegungen zwischen den benachbarten Platten möglich sind, insbesondere auch leicht gewölbte Flächen mit solchen Platten belegt werden können.

Die Kupplungsvorrichtung 4b ist, wie aus Fig. 3 ersichtlich ist, an der jeweils in Plattenverlegerichtung weisenden Plattenschmalseite angeordnet, befindet sich also an der bereits verlegten Platte, und die Kupplungsvorrichtung 4a befindet sich an der benachbarten Schmalseite der nächsten verlegten Platte, so dass die Plattenverlegung und das Kuppeln der Platten dadurch erfolgen kann, dass die nächstverlegte Platte durch Eindrücken der Kupplungsvorrichtungen 4a in die Kupplungsvorrichtung 4b der bereits verlegten Platte erfolgen kann. Wegen der scharnierartigen Ausbildung des Mittelstücks 42 kann die an die schon verlegte Platte anzusetzende weitere Platte in schräger Position aufgesteckt werden, die Kupplungsvorrichtungen 4a in die Kupplungsvorrichtungen 4b einzudrücken, und kann dann in horizontale Lage geschwenkt werden, wobei die Laschen 44 und das Mittelstück 42 wie ein Scharniergelenk wirken.

Den gekuppelten Zustand der Kupplungsvorrichtungen 4a und 4b zeigen die Fig. 5A und 5B in perspektivischer Ansicht schräg von oben bzw. in Draufsicht. Aus Fig. 5a ist auch ersichtlich, dass an den benachbarten Plattenrändern Bodenplattenrandbereiche 1a und 1b sich überlappen. Diese Überlappung ist dadurch möglich, dass die Bodenwandbereiche 1a und 1b an den Plattenrändem höhenversetzt angeordnet sind. Bei Wärmebewegungen der Platten relativ zueinander entstehen daher keine Lücken zwischen den Bodenwänden benachbarter Platten, in die Splittsteinchen hineinfallen und dann eine relative Wärmedehnungsbewegung behindern könnten, sondern aufgrund der gegenseitigen Überdeckung hat der gesamte Plattenverband stets einen über die verbundenen Plattenränder hinaus geschlossenen Boden.

Die komplementären Kupplungsvorrichtungen 6a und 6b an den Plattenlängsrändern sind in den Fig. 6A und 6B in ihren Einzelheiten dargestellt.

Gemäß 6A besteht die Kupplungsvorrichtung 6a aus einer Einbuchtung 61 in der zum Plattenrand parallelen äußeren Zellenwand 2c einer geschlossenen randständigen Zelle sowie aus einer Öffnung 62 im unteren Bereich der Zellenwand 2c und in der Bodenwand.

Die dazu komplementäre Kupplungsvorrichtung 6b weist gemäß Fig. 6B einen vorspringenden Haken mit einem Schaft 63, einem vorderen Querstück 64, und zwei beiderseits des Schafts 63 am Querstück rückseitig angeordneten Federlaschen 65 auf. Außerdem weist die Kupplungsvorrichtung 6b gemäß Fig. 6B einen vorspringenden Riegel 66 auf. Der Riegel 66 dient dazu, in die Öffnung 62 der Kupplungsvorrichtung 6a einzugreifen und damit die vordere Zellenwand 2c zu untergreifen, während der Riegel die Verbindung in horizontaler Richtung herstellt. Dabei nimmt die Einbuchtung 61 den Schaft 63 des Riegels auf, und das Querstück 64 des Riegels stützt sich mit seinen rückwärtigen Federlaschen 65 an der Innenwandfläche der Zellenwand 2c beiderseits der Einbuchtung 61 ab.

Die Kupplungsvorrichtungen 6a befindet sich an der Plattenlängsseite, an welche die nächste Plattenreihe beim Verlegen anzusetzen ist. Die Kupplungsvorrichtungen 6b befinden sich dann an der benachbarten Plattenlängsseite der anzusetzenden Platte. Dabei erfolgt das Ansetzen einer Platte der nächsten Plattenreihe an der Längsseite einer bereits verlegten Plattenreihe derart, dass die Platte in steiler Position mit ihrem Längsrand auf den Längsrand der bereits verlegten Platten so aufgesteckt wird, dass die Haken 63, 64 der Kupplungsvorrichtungen 6b über die äußeren Zellenwände 3e greifen, wonach dann die Platte in die horizontale Lage abgekippt wird. Dabei wirkt der Haken mit den Federlaschen 65 wie ein Scharniergelenk, und der Riegel 66 schiebt sich in die Öffnung 62 hinein. Nach dem Abkippen in die horizontale Auflage auf dem Boden ist dann die verlegte Platte sowohl in Querrichtung als auch in Vertikalrichtung formschlüssig mit den schon verlegten Platten verbunden.

Beim Abkippen einer mit ihrer Längsseite an eine schon verlegte Plattenreihe angesetzten Platte greifen dann auch die an der Schmalseite befindlichen Kupplungsvorrichtungen 4a in die Kupplungsvorrichtungen 4b einer in der betreffenden Plattenreihe schon verlegten Platte.

Da der Schaft 63 des Hakens 63, 64 in der etwas breiteren Einbuchtung 61 der Kupplungsvorrichtung 6a seitlichen Spielraum hat und das Querstück 64 mit Federlaschen 65 ausgebildet ist und über diese an der Zellenwand 3e abgestützt ist, und da auch der Riegel 66 etwas seitliches Spiel in der Öffnung 62 hat, ermöglicht auch die Kupplung zwischen den Kupplungsvorrichtungen 6a und 6b Wärmebewegungen Längs- und Querrichtung der Platten.

Die Fig. 7A und 7B zeigen den gekuppelten Zustand an den Längsrändern benachbarter Platten mit den ineinandergreifenden Kupplungsvorrichtungen 6a und 6b in perspektivischer Ansicht schräg von oben sowie in Draufsicht. Auch an den Längsrändern der Platten, findet eine Überlappung von höhenversetzten Randbereichen der Bodenwände benachbarter Platten statt.

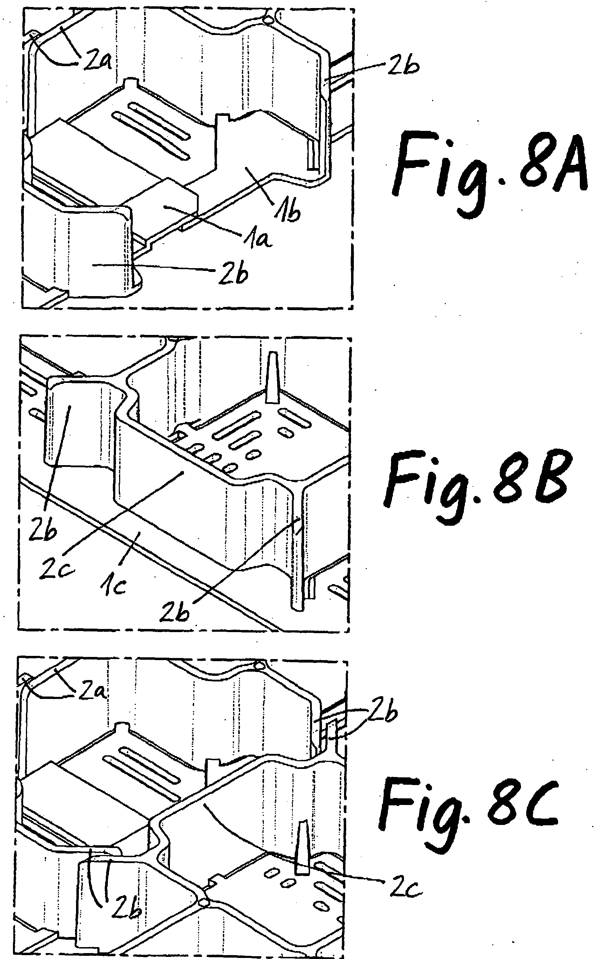

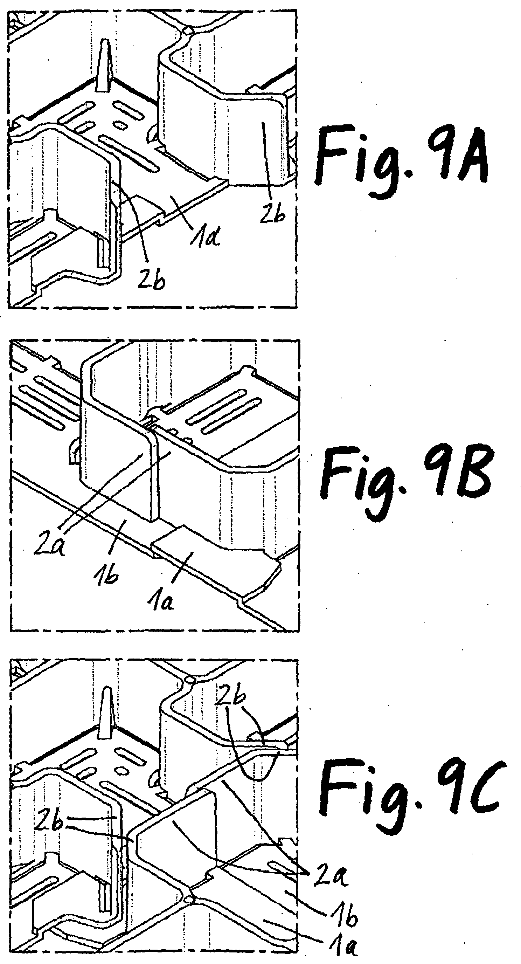

Die Überlappungen sowohl der Zellenwandendbereiche als auch der Bodenwandrandbereiche benachbarter Platten an den Längsrändern sind in den Fig. 8A bis 8C sowie 9A bis 9C dargestellt.

Dabei zeigen die Fig. 8A bis 8C die Situation an einem Längsrand einer Platte, und zwar an der in Fig. 1 nach links oben weisenden Plattenlängsseite. Das ist die Plattenlängsseite, an der jede zweite randständige Zelle außen mit einer zum Plattenrand parallelen Zellenwand 2c abgeschlossen ist.

Dargestellt ist die Situation an einem Stoß von drei Platten, an welchem zwei mit ihren Schmalseiten gekuppelten Platten in der Mitte der Längsseite an eine (zuvor verlegte) dritte Platte stoßen. Damit die Verhältnisse deutlicher erkennbar sind, zeigt Fig. 8B den Mittenbereich des in Fig. 1 nach links oben weisenden Plattenrands ohne die daran gestoßenen benachbarten Platten, und Fig. 8A zeigt die beiden an ihren Schmalseiten schon gekuppelten Platten, die an den in Fig. 8B gezeigten Plattenrand stoßen, wiederum für sich allein. Fig. 8C zeigt dann den Stoß aller drei Platten.

In Fig. 8A ist sichtbar, wie die Wandendbereiche 2a der beiden an den Schmalseiten gekuppelten Platten sich etwas überlappen, und wie sich dort ebenfalls ein Bodenwandendbereich 1a der einen Platte mit einem komplementären Bodenwandendbereich 1b überlappt. Diese sich überlappenden Bodenwandendbereiche 1a und 1b der beiden an den Schmalseiten gekuppelten Platten nach Fig. 8A überdecken beim Kuppeln mit dem Längsrand der in Fig. 8B gezeigten Platte deren Bodenwandrandbereich 1c, so dass alle drei gekuppelten Platten zusammen eine geschlossene Bodenfläche bilden.

Fig. 8A zeigt alle drei gekuppelten Platten, wobei ersichtlich ist, wie die Zellenwandendbereiche 2b der drei Platten sich überlappen.

Die Fig. 9A bis 9C zeigen analog den Fig. 8A bis 8C die Überlappungsverhältnisse bei einem Plattenstoß in der Mitte der in Fig. 1 nach rechts unten weisenden Plattenlängsseite. Die Mitte dieser Plattenlängsseite zeigt Fig. 9A, und Fig. 9B zeigt zwei bereits verlegte, an ihren Schmalseiten gekuppelte Platten, bei denen sich die Zellenwandendbereiche 2a überlappen und sich die Bodenendbereiche 1a und 1b überlappen. Bei der beim Verlegevorgang daran anzusetzenden, in Fig. 9A dargestellten Platte erkennt man einen abgestuften Bodenwandrandbereich 1d, der komplementär zu den sich überlappenden Bodenwandbereichen 1a und 1b der in Fig. 9B gezeigten Platten ausgebildet ist, so dass auch hier eine Überlappung der Bodenwandrandbereiche erfolgen kann, damit die verlegten Platten alle zusammen eine geschlossene Bodenfläche bilden. In Fig. 9C ist dann der Stoß aller drei Platten dargestellt, wobei wiederum auch die Überlappung der längsseitigen Zellenwandendbereiche 2c sichtbar ist.

Wenn vorstehend von einer geschlossenen Bodenfläche die Rede ist, ist damit gemeint, dann sich zwischen den Bodenwänden benachbarter Platten keine Lücken befinden. Die Bodenwände sind selbstverständlich insoweit nicht geschlossen, als sie Wasserdurchtrittsöffnungen haben, die außer in den Fig. 1 bis 3 in allen anderen Figuren als schmale schlitzförmige Durchbrüche erkennbar sind.

## Patentansprüche

1. Eine mit Splitt befüllbare Zellen (3) bildende wasserdurchlässige rechteckige Bodenbefestigungsplatte (1, 2) zur Herstellung befestigter Bodenflächen wie Wege, Einfahrten, Parkplätze oder ähnliches, bestehend aus einer im wesentlichen geschlossenen, aber mit Wasserdurchtrittsöffnungen versehenen Bodenwand (1) und einem damit einstückig ausgebildeten, sich von der Bodenwand nach oben erstreckenden und eine Vielzahl von Zellen (3) begrenzenden Wandgitter (2),und mit eine Verbindung aneinanderstoßender benachbarter Platten entlang der Plattenränder ermöglichenden Kupplungsmitteln (4a, 4b, 6a, 6b), wobei
die Wasserdurchtrittsöffnungen aufweisende Bodenwand (1) an den Plattenrändern mit komplementären höhenversetzten Randbereichen (1a, 1b, 1c, 1d) ausgebildet ist, die beim Verbinden benachbarter Platten eine Überlappung der Bodenwandbereiche benachbarter Platten erzeugen, und wobei
die an den Plattenrändem jeweils quer zum jeweiligen Plattenrand verlaufenden Zellenwände der mindestens teilweise zum Plattenrand hin offenen randständigen Zellen mit Endbereichen (2a, 2b) ausgebildet sind, die bei verbundenen Platten sich aneinanderliegend mit den entsprechenden Zellenwandbereichen der benachbarten Platte bewegungsspielbehaftet überlappen,
**dadurch gekennzeichnet, dass**
a) die Bodenbefestigungsplatte als Kunststoffpritzgußteil ausgebildet ist, dass
b) die Wasserdurchtrittsöffnungen an der Bodenwand nur kleine, Splittteilchen nicht austreten lassen, dass
c) die Überlappung der Bodenwandbereiche benachbarter Platten bewegungsspielbehaftet und derart erzeugt ist, dass bei Bewegungen der Platten relativ zueinander aufgrund der gegenseitigen Überdeckung der Bodenplattenrandbereiche in einem Plattenverband keine Lücken zwischen den Bodenwänden benachbarter Platten entstehen und der gesamte Plattenverband stets einen über die verbundenen Plattenränder hinaus geschlossenen Boden hat und dass
d) die an den Plattenrändem angeordneten komplementären Kupplungsmittel (4a, 4b, 6a, 6b) die benachbarten Platten sowohl gegen ein Trennen als auch gegen relative vertikale Bewegungen der Plattenränder sichern und mit elastischen Elementen (44, 65) ausgebildet sind, die bei gekuppelten Platten ein elastischen Bewegungsspiel zulassen.

2. Bodenbefestigungsplatte nach Anspruch 1, wobei mindestens die Endbereiche (2a) der an den Plattenschmalseiten quer zum Plattenrand verlaufenden Zellenwände an den gegenüberliegenden Plattenschmalseiten komplementär schwach mit Bezug auf die Plattenlängsrichtung schräg gestellt sind.

3. Bodenbefestigungsplatte nach Anspruch 1 oder 2, wobei die Endbereiche (2b) der quer zum Plattenrand verlaufenden Zellenwände an den gegenüberliegenden Plattenlängsseiten komplementär um einen deutlichen Winkel mit Bezug auf die Plattenquerrichtung abgewinkelt sind.

4. Bodenbefestigungsplatte nach Anspruch 3, wobei an jeder Plattenlängsseite die Abwinkelung der Zellenwandendbereiche (2b) über die eine Hälfte der Plattenlängsseite nach einer Richtung und über die andere Hälfte der Plattenlängsseite nach einer entgegengesetzten Richtung erfolgt, und zwar jeweils zur betreffenden Plattenschmalseite hin.

5. Bodenbefestigungsplatte nach einem der Ansprüche 1 bis 4, wobei das rechteckige Plattenformat ein Seitenlängenverhältnis von etwa 2 : 1 hat.

6. Bodenbefestigungsplatte nach einem der Ansprüche 1 bis 5, wobei das Wandgitter (2) quadratische oder rechteckige Zellen bildet und mindestens an den beiden Plattenschmalseiten jeweils zum Plattenrand hin offene randständige Halbzellen (3a) gebildet sind.

7. Bodenbefestigungsplatte nach einem der Ansprüche 1 bis 6, wobei jedes an den Plattenschmalseitcn angeordnete Paar komplementärer Kupplungsmittel (4a, 4b) an der einen Plattenschmalseite einen an einem Bügel (41) oder Arm angeordneten Eingriffskörper (42) und an der anderen Plattenschmalseite eine Eingriffskörperaufnahme aufweist, die von mindestens in Längsrichtung der Platte federelastischen Elementen (43, 44) begrenzt ist und eine rastende Aufnahme des Eingriffskörpers ermöglicht.

8. Bodenbefestigungsplatte nach Anspruch 7, wobei die Eingriffskörperaufnahme zwei beiderseitige, in Plattenlängsrichtung verlaufende und in Plattenquerrichtung elastische Führungsschenkel (43) und zwei vordere und hintere, den Eingriffskörper (42) rastend zwischen sich aufnehmende, in Plattenlängsrichtung elastische Rastzungen (44) aufweist.

9. Bodenbefestigungsplatte nach einem der Ansprüche 1 bis 8, wobei jedes Paar von an den Plattenlängsseiten angeordneten komplementären Kupplungsmitteln an der einen Plattenlängsseite einen Haken (63, 64) mit mindestens einem federelastischen Element (65) sowie einen auswärts vorspringenden Finger oder Riegel (66), und an der anderen Plattenlängsseite ein Gegenelement (61) für den Haken sowie eine ein Element (2c) der Platte untergreifende Öffnung (62) zur Aufnahme des vorspringenden Fingers oder Riegels (66) aufweist.

10. Bodenbefestigungsplatte nach Anspruch 9, wobei der Haken einen Schaft (63) und ein vorderen Querteil (64) mit zwei beiderseits des Schafts angeordneten, rückwärtig im Bogen nach oben verlaufenden Federlaschen (65) aufweist, und das Gegenelement eine den Schaft mit seitlichem Spiel aufnehmende Einbuchtung (61) in einer äußeren, zum Plattenrand etwa parallel verlaufenden Zellenwand (2c) ist, und wobei die Federlaschen des Riegels sich beiderseits der Einbuchtung (61) an der Zellenwand abstützen.

## Claims

1. Rectangular and water-permeable soil stabilisation panel (1, 2) defining cells (3) that can be filled with grit, for producing reinforced soil areas, such as footways, driveways, parking lots or the like, the panel consisting of a substantially closed bottom wall (1) provided with water passage openings, and a wall grate (2) integrally formed with the bottom wall, extending upward therefrom and limiting a plurality of cells (3), and with coupling means (4a, 4b, 6a, 6b) allowing the coupling of adjacent and adjoining panels along the panel edges, wherein the bottom wall (1) with the water passage openings is formed with complementary edge areas (1a, 1b, 1c, 1d) that are offset in elevation and that create an overlapping of the bottom wall areas of adjacent panels during the connection of adjacent panels, and wherein
the cell walls respectively extending transversely to the respective panel edge of the peripheral cells that are at least partly open towards the panel edge are configured with end areas (2a, 2b) which, in connected panels, overlap with the corresponding cell wall areas of the adjacent plate with a clearance for movement,
**characterized in that**
a) the soil reinforcing panel is configured as a plastic mold part, **in that**
b) the water passage openings in the bottom allow for the exit of only small particles, but not of grit, **in that**
c) the overlap of the bottom wall areas of adjacent panels is created with a clearance for movement and in such a way that in case of movement of the panels relative to one another no gaps between the bottom walls of adjacent plates are created due to the mutual overlapping of the edge areas of the bottom panels in a panel assembly, and the overall panel assembly always has a continuous bottom extending above the connected panel edges, and **in that**
d) the complementary coupling means (4a, 4b, 6a, 6b) arranged at the panel edges secure the adjacent panels against their separation as well as relative vertical movement of the panel edges, and are formed with elastic elements (44, 65) which allow for elastic movement play when the panels are coupled.

2. Soil stabilisation panel according to claim 1, wherein at least the end regions (2a) of the cell walls extending transversely to the panel edge on the short panel sides have a slight complementary inclination relative to the longitudinal panel direction on the opposing short panel sides.

3. Soil stabilisation panel according to claim 1 or 2, wherein the end regions (2b) of the cell walls extending transversely to the panel edge on the opposing longitudinal panel sides are complementarily angled with a significant angle relative to the transverse panel direction.

4. Soil stabilisation panel according to claim 3, wherein on each longitudinal panel side the angle of the cell wall end areas (2b) faces in one direction over the first half of the longitudinal panel side, and in an opposing direction over the other half of the longitudinal panel side, in each case towards the respective short panel side.

5. Soil stabilisation panel according to any one of claims 1 to 4, wherein the rectangular panel shape has a side-length ratio of about 2 : 1.

6. Soil stabilisation panel according to any one of claims 1 to 5, wherein the wall grid (2) forms square or rectangular cells, and at least on the short panel sides peripheral half cells (3a) are formed that are respectively open towards the panel edge.

7. Soil stabilisation panel according to any one of claims 1 to 6, wherein each pair of complementary coupling means (4a, 4b) arranged on the short panel sides has an engagement body (42) arranged on a bracket (41) or arm on one short panel side, and a receiving feature for the engagement body on the other short panel side, the receiving feature being delimited at least in a longitudinal direction of the panel by resilient elements (43, 44) and allowing a locking reception of the engagement body.

8. Soil stabilisation panel according to claim 7, wherein the receiving feature for the engagement body has two guiding legs (43) on both sides that extend in the longitudinal panel direction and are elastic in the transverse panel direction, as well as two front and back locking tongues (44) that are elastic in the longitudinal panel direction and receive the engagement body (42) in a locking manner between them.

9. Soil stabilisation panel according to any one of claims 1 to 8, wherein each pair of complementary coupling means arranged on the longitudinal panel sides has a hook (63, 64) with at least one resilient element (65) and an outwardly protruding finger or bar (66) on the one longitudinal panel side, and a counter element (61) for the hook and an opening (62) engaging an element (2c) of the panel from below for receiving the protruding finger or bar (66) on the other longitudinal panel side.

10. Soil stabilisation panel according to claim 9, wherein the hook has a stem (63) and a transverse front part (64) having to spring tabs (65) arranged on both sides of the stem and extending in a curve backwards and upwards, and wherein the counter element is an indentation (61) in an outer cell wall (2c) extending approximately in parallel with the panel edge, the indentation receiving the stem with lateral clearance, and wherein the spring tabs of the bar are supported on the cell wall on both sides of the indentation (61).

## Revendications

1. Plaque de stabilisation de sol (1, 2) rectangulaire qui est perméable à l'eau et qui forme des cellules (3) pouvant être remplies de graviers, pour la fabrication des chemins, entrées et parkings ou similaires, la plaque consistant en une paroi de fond (1) sensiblement fermée, mais pourvue des ouvertures de passage d'eau, et une grille de paroi (2) formée d'une pièce avec la paroi de fond, s'étendant de celle-ci vers le haut, et délimitant une pluralité de cellules (3), et avec des moyens de couplage (4a, 4b, 6a, 6b) qui permettent une liaison des plaques adjacentes et adjointes le long les bords de plaques, la paroi de fond (1) pourvue des ouvertures de passage d'eau étant configurée avec des régions de bord (1a, 1b, 1c, 1d) complémentaires et décalées en hauteur sur les bords de plaque, les régions de bord créant un chevauchement des régions de paroi de fond des plaques adjacentes pendant la liaison des plaques adjacentes, et
dans laquelle les parois de cellules périphériques et au moins partiellement ouvertes vers le bord de plaque qui s'étendent sur les bords de plaque respectivement de manière transverse au bord respectif de plaque sont configurées avec des régions d'extrémité (2a, 2b) qui, quand les plaques sont liées, se chevauchent de manière adjacente avec les régions correspondantes des parois de cellules avec un jeu de mouvement,
**caractérisée en ce que**
a) la plaque de stabilisation de sol est configurée en tant que pièce en plastique moulée par injection, **en ce que**
b) les ouvertures de passage d'eau dans la paroi de fond laissent passer seulement particules petites, mais pas de particules de graviers, **en ce que**
c) le chevauchement des régions de paroi de fond des plaques adjacentes est effectué avec un jeu de mouvement et de telle manière que les mouvements relatifs entre les plaques, grâce au chevauchement mutuel des régions de bord de plaque de fond, ne créent pas des lacunes dans l'ensemble des plaques entre les régions de paroi de fond des plaques adjacentes, et l'ensemble total des plaques toujours présente un fond fermé au delà des bords de plaque liés, et **en ce que**
d) les moyens de couplage (4a, 4b, 6a, 6b) complémentaires et disposés sur les bords de plaque fixent les plaques adjacentes contre leur séparation et aussi contre mouvement relatif vertical des bords de plaque, et sont configurés avec des éléments élastiques (44, 65) qui permettent un jeu de mouvement élastique quand les plaques sont couplées.

2. Plaque de stabilisation de sol selon la revendication 1, dans laquelle au moins les régions d'extrémité (2a) des bords de cellule s'étendant transversalement au bord de plaque sur les petits côtés de plaque sont légèrement inclinées de manière complémentaire par rapport à la direction longitudinale de plaque sur les petits côtés de plaque opposés.

3. Plaque de stabilisation de sol selon la revendication 1 ou 2, dans laquelle les régions d'extrémité (2b) des bords de cellule s'étendant transversalement au bord de plaque sont disposées sur les côtés longs de plaque de manière complémentaire avec un angle net par rapport à la direction transversale de plaque.

4. Plaque de stabilisation de sol selon la revendication 3, dans laquelle l'angle des régions d'extrémité (2b) des parois de cellule s'étend, sur chaque côté long de plaque, à travers d'une moitié du côté long de plaque dans l'une direction, et dans la direction opposée à travers l'autre côté long de plaque, en chaque cas vers le petit côté de plaque concerné.

5. Plaque de stabilisation de sol selon l'une quelconque des revendications 1 à 4, dans laquelle le format des plaques présente un rapport des côtés d'environ 2 : 1.

6. Plaque de stabilisation de sol selon l'une quelconque des revendications 1 à 5, dans laquelle la grille de paroi (2) forme des cellules carrées ou rectangulaires, et dans laquelle, au moins sur les deux petits côtés des plaques, sont formées des demi-cellules (3a) périphériques et ouvertes vers le bord de plaque.

7. Plaque de stabilisation de sol selon l'une quelconque des revendications 1 à 6, dans laquelle chaque paire des moyens de couplage complémentaires (4a, 4b) disposées sur les petits côtés des plaques présente, sur l'un petit côté de la plaque, un corps d'engagement (42) disposé sur une monture (41) ou un bras, et, sur l'autre petit côté de la plaque, un logement pour le corps d'engagement, le logement étant délimité par des éléments (43, 44) élastiques au moins dans la direction longitudinale de la plaque, et permettant la réception verrouillante du corps d'engagement.

8. Plaque de stabilisation de sol selon la revendication 7, dans laquelle le logement du corps d'engagement présente, des deux côtés, deux branches de guidage (43) s'étendant dans la direction longitudinale de la plaque et étant élastiques dans la direction transversale de la plaque, aussi que deux languettes de verrouillage (44), respectivement arrière et derrière, qui sont élastiques dans la direction longitudinale de la plaque et qui reçoivent entre elles, de manière verrouillante, le corps d'engagement (42).

9. Plaque de stabilisation de sol selon l'une quelconque des revendications 1 à 8, dans laquelle chaque paire des moyens de couplage complémentaires disposées sur les côtés longs de la plaque présente, sur l'un côté long de la plaque, un crochet (63, 64) avec au moins un élément élastique (65) et un doigt ou verrou (66) faisant saillie vers l'extérieur, et, sur l'autre côté long de la plaque, un élément opposé (61) pour le crochet aussi qu'une ouverture (62) passant sous un élément (2c) de la plaque pour recevoir le doigt ou verrou (66).

10. Plaque de stabilisation de sol selon la revendication 9, dans laquelle le crochet présente une tige (63) et une partie transversale frontale (64) avec deux languettes à ressort (65) disposées des deux côtés de la tige et s'étendant en arc vers l'arrière et vers le haut, et l'élément opposé présente un creux (61) dans une paroi de cellule (2c) extérieure et sensiblement parallèle au bord de plaque, le creux recevant la tige avec un jeu latéral, et dans laquelle les languettes à ressort du verrou s'appuient sur la paroi de cellules des deux côtés du creux (61).
